# EUROPEAN PATENT APPLICATION

(11) **EP 3 100 618 A1**
(43) Date of publication of application: **07.12.2016**
(21) Application number: 16172234.3
(22) Date of filing: 31.05.2016
(51) Int. Cl.: A23K 40/30, B01F 3/12, B01F 15/02, B01F 15/04, A23K 20/195

(54) **A METHOD FOR MANUFACTURING SPRINKLABLE DRY ANIMAL FEED**

(30) Priority: 03.06.2015 NL 2014911
(71) Applicant: IVS Dosing Technology, 5465 TB Veghel (NL)
(72) Inventor: DEN OTTER, Johannes Adrianus Antonius, 5465 TB Veghel (NL); DIELISSEN, Johannes Antonius Franciscus Albertus Maria, 5465 TB Veghel (NL); VAN DE VEN, Hein Hendrik Martinus, 5465 TB Veghel (NL)
(74) Representative: Algemeen Octrooi- en Merkenbureau B.V.

(57) **Abstract**

Method for manufacturing sprinklable dry animal feed comprising pellets and/or granules which are at least partially provided with micro-components on outer sides thereof, comprising the steps of:
- providing individual pellets and/or granules free of micro-components, wherein the micro-components comprise at least a coccidiostat and/or an anti-coccidiostat;
- applying a carrier material provided with micro-components to the individual pellets and/or granules.

## Description

The present invention relates according to a first aspect to a method for manufacturing sprinklable dry animal feed comprising pellets and/or granules which are at least partially provided with micro-components on outer sides thereof.

In a known method for manufacturing animal feed provided with micro-components the micro-components are mixed together with further constituents of the animal feed before for instance pellets are made therefrom. As a result of this preparation method the micro-components are absorbed into the volume of the individual pellets, whereby a more or less homogenous distribution of the micro-components is present in the pellets. Following preparation of pellets provided with micro-components, the machines, such as for instance a mixing device, hammer device, pressing device, extruding device, expanding device, storage devices, transport devices and/or pipes connecting these devices, have to be cleaned so as to prevent the presence of micro-components in animal feed subsequently manufactured, stored and/or transported with the same machines. A drawback of this method is that such a cleaning reduces the efficiency of the machines.

An object of the present invention is therefore to provide a method wherein the efficiency of the machines can be increased. This object is achieved with the method according to claim 1 in accordance with the present method, in that the method is provided with the steps of:
- providing individual pellets and/or granules free of micro-components, wherein the micro-components comprise at least a coccidiostat and/or an anti-coccidiostat;
- applying a carrier material provided with micro-components to the individual pellets and/or granules.

By applying the micro-components to an outer side of the individual pellets and/or granules and by providing individual pellets and/or granules which are at least free of a coccidiostat and/or an anti-coccidiostat entry of the micro-components into the machines for manufacturing the pellets is avoided. The relatively prolonged and costly cleaning of these machines, at least for the purpose of removing the micro-components, is not therefore necessary.

The invention is based at least partially on the inventive insight that, for the purpose of manufacturing animal feed, a carrier material in which micro-components are provided can be applied relatively reliably and homogeneously on sprinklable dry animal feed.

Deccox® and Maxiban® 160 are examples of a coccidiostat, a veterinary medication for controlling coccidiosis. Coccidiosis is an infectious disease caused by single-celled organisms (protozoa), in this case coccidia.

In the context of the present invention micro-components are understood to mean for instance therapeutically active substances from the group consisting of probiotics, antibiotics, antifungal agent, antiviral agent, antiparasitic agents.

In the context of the present invention individual pellets and/or granules are understood to mean separate parts with a size of at least 1 mm.

It is advantageous here that the step of providing comprises of:
- providing individual pellets and/or granules free of micro-components, wherein the micro-components comprise a therapeutically active substance chosen from the group consisting of probiotics, antibiotics, antifungal agent, antiviral agent, antiparasitic agent.

Providing individual pellets and/or granules free of such substances also prevents undesirable contamination of the machines with these substances, whereby the efficiency of the equipment is further increased in that, at least in respect of such substances, equipment requires less frequent cleaning.

The step of providing preferably comprises of:
- providing individual pellets and/or granules free of micro-components, wherein the micro-components comprise a random therapeutically active substance.

By providing individual pellets and/or granules free of a random therapeutically active substance the efficiency of the machines can be increased still further, at least in respect of contamination of the equipment by therapeutically active substance.

It is advantageous for the carrier material to be embodied as a fluid, wherein the method further comprises the step of:
- spraying the carrier material onto the individual pellets and/or granules.

A fluid carrier material makes it possible in advantageous manner to coat the individual pellets. In a favourable embodiment the carrier material is sprayed onto the individual pellets and/or granules with a pressure in the range of 1.5 to 3 bar.

The method preferably further comprises the step of:
- heating for the purpose of bringing the carrier material into and/or holding it in fluid state before applying the carrier material to the individual pellets and/or granules.

As a result of the heating carrier materials can be applied which are solid at normal temperature of use of the animal feed. Hereby realized in simple manner is that, by cooling the carrier material following application to the individual pellets and/or granules, the animal feed is dry and/or sprinklable. The carrier material is preferably heated to a temperature in the range of 10 to 70 degrees Celsius.

It is advantageous that the method further comprises the step of:
- providing the individual pellets and/or granules in a substantially sealed space, and comprises the step of lowering the pressure in the space relative to the outside air.

By providing a sealed space in which the individual pellets and/or granules are under a pressure lower than the pressure of the outside air a reliable adhesion of the carrier material at least partially to the outer side of the individual pellets and/or granules is achieved. Contamination of the machines for manufacturing, storing and/or transporting the pellets by the micro-components is hereby avoided or at least greatly reduced. It is noted that, when porous individual pellets and/or granules are applied, the carrier material can penetrate at least partially into the individual pellets and/or granules because of a lower pressure in the said space. This is advantageous for avoiding, or at least reducing, contamination of machines for manufacturing, storing and/or transporting pellets and/or granules with the micro-components. In a favourable embodiment the pressure in the sealed space is reduced in the range of 70 to 800 mbar relative to the pressure of the outside air. The method preferably further comprises the step of:
- atomizing the carrier material for the purpose of the step of applying the carrier material.

Atomizing the carrier material achieves a finer distribution of the carrier material on the individual pellets and/or granules. A more uniform distribution of the carrier material over the animal feed can hereby be realized.

It is advantageous that the step of providing the pellets and/or granules free of micro-components comprises the steps:
- providing ingredients for the pellets and/or granules in a container;
- mixing the ingredients in the container;
- pressing, expanding or extruding the mixture in order to obtain the individual pellets and/or granules.

The micro-components provided in the carrier material preferably comprise a therapeutically active substance. Providing a therapeutically active substance in the carrier material is advantageous for the manufacture of animal feed with a therapeutic action, wherein the efficiency of the machines employed is increased.

It is advantageous here for the therapeutically active substance to be chosen from the group consisting of probiotics, antibiotics, antifungal agent, antiviral agent, antiparasitic agent. The inventor has found that it is these therapeutic substances in particular which reduce the efficiency of the machines.

It is advantageous here for the antiparasitic agent to be a coccidiostat and/or an anti-coccidiostat. Coccidiostats are an advantageous choice as micro-component in the carrier material in view of the relatively great loss of efficiency of the machines. Legislation particularly requires a frequent and thorough cleaning for the purpose of preventing the presence of undesirable coccidiostats in animal feed.

The provided individual pellets and/or granules are preferably mixed feed. Mixed feed is advantageous because use is made of machines such as a mixing device during the manufacture of mixed feed. An improvement in the efficiency of for instance a mixing device is attractive in terms of reducing the costs of manufacturing mixed feed provided with micro-components.

In a practical embodiment of the method the method is provided with the steps of:
- providing individual pellets and/or granules free of micro-components, zinc, copper, aromatic substances, colouring agents and/or flavourings, wherein the micro-components comprise at least a coccidiostat and/or an anti-coccidiostat;
- applying a carrier material provided with micro-components, zinc, copper, aromatic substances, colouring agents and/or flavourings to the individual pellets and/or granules.

By applying micro-components, zinc, copper, aromatic substances, colouring agents and/or flavourings to an outer side of the individual pellets and/or granules and by providing individual pellets and/or granules which are at least free of a coccidiostat and/or an anti-coccidiostat, zinc, copper, aromatic substances, colouring agents and/or flavourings, the entry of micro-components, zinc, copper, aromatic substances, colouring agents and/or flavourings into the machines for manufacturing the pellets is avoided. The relatively prolonged and costly cleaning of these machines is not therefore necessary, at least to remove the micro-components, zinc, copper, aromatic substances, colouring agents and/or flavourings.

The present invention will be elucidated hereinbelow on the basis of the description of preferred embodiments of a method for manufacturing pellets provided with micro-components on a surface thereof.

During application of the method according to the present invention the sprinklable dry animal feed, such as for instance pellets for pigs or cows, is manufactured from raw ingredients which can be received in silos. The required quantity of ingredient is discharged from the silos and fed to a device for manufacturing pellets. This device is provided with a hammer mill for reducing the size of the ingredient parts, a mixing machine for mixing the ingredients and a press for pressing pellets. These pellets are subsequently guided to a coating device for applying carrier material provided with micro-components. The carrier material consists of an oil, although other carrier materials such as fats and/or liquids can likewise be applied. Following application of the carrier material the pellets are stored in a storage device and/or transport device.

The coating device is provided with a substantially sealed space. Once the pellets have been provided in said space, the pressure in said space is reduced in the range of 70 to 800 mbar relative to the pressure of the outside air. Before the carrier material provided with micro-components is applied to the pellets present in said space, the carrier material provided with micro-components is heated to a temperature in the range of 10 to 70 degrees Celsius for the purpose of bringing the carrier material provided with micro-components into fluid state. The fluid carrier material is then atomized into said space under a pressure of 1.5 to 3 bar using spray nozzles. The atomized carrier material provided with micro-components adheres here to the pellets and is restored to solid state by cooling. After the coating has been applied the pellets are stored in a silo before being transported to the customer.

In an embodiment of the method the pressure in said space of the coating device is reduced by 110 mbar relative to the outside air. At a pressure of 2 bar and a temperature of 10 degrees Celsius the fluid carrier material is then atomized into the space for a period of 30 seconds. The carrier material comprises an oil in which 125 g of micro-components comprising coccidiostat and anti-coccidiostat are provided per litre. The pellets are shaken for 30 seconds for realizing in favourable manner an improved uniform distribution of the atomized carrier material over the individual pellets.

In a further embodiment of the method the pressure in said space of the coating device is reduced by 90 mbar relative to the outside air. At a pressure of 2 bar and a temperature of 20 degrees Celsius the fluid carrier material is then atomized into the space for a period of 30 seconds. The carrier material comprises a fat in which 100 g of micro-components comprising coccidiostat and anti-coccidiostat are provided per litre. The pellets are shaken for 20 seconds for realizing in favourable manner an improved uniform distribution of the atomized carrier material over the individual pellets.

In yet another embodiment of the method the pressure in said space of the coating device is reduced by 75 mbar relative to the outside air. At a pressure of 2 bar and a temperature of 20 degrees Celsius the fluid carrier material is then atomized into the space for a period of 30 seconds. The carrier material comprises an oil in which 200 g of micro-components comprising coccidiostat and anti-coccidiostat are provided per litre. The pellets are shaken for 30 seconds for realizing in favourable manner an improved uniform distribution of the atomized carrier material over the individual pellets.

## Claims

1. A method for manufacturing sprinklable dry animal feed comprising pellets and/or granules which are at least partially provided with micro-components on outer sides thereof,
comprising the steps of:
- providing individual pellets and/or granules free of micro-components, wherein the micro-components comprise at least a coccidiostat and/or an anti-coccidiostat;
- applying a carrier material provided with micro-components to the individual pellets and/or granules.

2. The method according to claim 1, wherein the step of providing comprises of:
- providing individual pellets and/or granules free of micro-components, wherein the micro-components comprise a therapeutically active substance chosen from the group consisting of probiotics, antibiotics, antifungal agent, antiviral agent, antiparasitic agent.

3. The method according to claim 1 or 2, wherein the step of providing comprises of:
- providing individual pellets and/or granules free of micro-components, wherein the micro-components comprise a random therapeutically active substance.

4. The method according to any of the preceding claims, wherein the carrier material is embodied as a fluid, which method further comprises the step of:
- spraying the carrier material onto the individual pellets and/or granules.

5. The method according to any of the preceding claims, further comprising the step of:
- heating for the purpose of bringing the carrier material into and/or holding it in fluid state before applying the carrier material to the individual pellets and/or granules.

6. The method according to any of the preceding claims, wherein the method further comprises the steps of:
- providing the individual pellets and/or granules in a substantially sealed space;
- lowering the pressure in the space relative to the outside air.

7. The method according to any of the preceding claims, wherein the method further comprises the step of:
- atomizing the carrier material for the purpose of the step of applying the carrier material.

8. The method according to any of the preceding claims, wherein the step of providing the pellets and/or granules free of micro-components comprises:
- providing ingredients for the pellets and/or granules in a container;
- mixing the ingredients in the container;
- pressing, expanding or extruding the mixture in order to obtain the individual pellets and/or granules.

9. The method according to any of the preceding claims, wherein the micro-components provided in the carrier material comprise a therapeutically active substance.

10. The method according to claim 9, wherein the therapeutically active substance is chosen from the group consisting of probiotics, antibiotics, antifungal agent, antiviral agent, antiparasitic agent.

11. The method according to claim 10, wherein the antiparasitic agent is a coccidiostat and/or an anti-coccidiostat.

12. The method according to any of the preceding claims, wherein the provided individual pellets and/or granules are mixed feed.
